# EUROPÄISCHE PATENTSCHRIFT

(11) **EP 1 656 729 B1**
(45) Veröffentlichungstag und Bekanntmachung des Hinweises auf die Patenterteilung: **06.03.2013**
(21) Anmeldenummer: 04737413.7
(22) Anmeldetag: 09.08.2004
(51) Int. Cl.: H02M 3/335

(54) **SCHALTWANDLER**
VOLTAGE CONVERTER
CONVERTISSEUR DE COMMUTATION

(30) Priorität: 20.08.2003 AT 13122003
(43) Veröffentlichungstag der Anmeldung: 17.05.2006
(73) Patentinhaber: Siemens Aktiengesellschaft, 80333 München (DE)
(72) Erfinder: ECKL, Gerald, A-2123 Schleinbach (AT); CESNAK, Lorand, A-1050 Wien (AT)
(74) Vertreter: Maier, Daniel Oliver
(86) Internationale Anmeldenummer: PCT/AT2004/000283
(87) Internationale Veröffentlichungsnummer: WO 2005/020415

(56) Entgegenhaltungen:
- US-A- 5 272 614
- US-A1- 2002 190 577
- US-A1- 2003 117 752
- US-A1- 2004 075 600

## Beschreibung

Die Erfindung bezieht sich auf einen Schaltwandler zum Wandeln einer Primär/Sekundärspannung in eine Sekundär/Primärspannung, mit zumindest einem gesteuerten Schalter, wobei eine Ansteuerschaltung in Abhängigkeit von ihr zugeführten Vorgabewerten den zumindest einen gesteuerten Schalter mit variablem Tastverhältnis und/oder variablen Steuerzeiten und/ oder variabler Frequenz ansteuert.

Schaltwandler der gegenständlichen Art sind in unterschiedlichen Ausführungsformen bekannt geworden. Beispielsweise zeigt die JP 2000333455 A einen bidirektionalen Schaltwandler für Gleichspannung. Einen Gleichspannungs-/Wechselspannungswandler, der jedoch nur unidirektional arbeitet, zeigt die US 5,473,530, in welcher auch erläutert ist, wie an einem pulsweitenmodulierten Signal eine Wechselspannung erzeugt werden kann. Eine direkte Umwandlung einer netzfrequenten Wechseleingangsspannung in eine gleichfalls netzfrequente Wechselausgangsspannung ist in der GB 2 301 239 A beschrieben, wobei ein als Durchflusswandler ausgebildeter Tiefsetzsteller ohne galvanische Trennung verwendet wird, welcher mit hoher Schaltfrequenz arbeitet.

Dokument US 5 272 614 zeigt einem Schaltwandlez mit Busschnittstelle.

Üblicherweise arbeiten Schaltwandler z.B. in Industriebetrieben völlig autark, wobei sie allenfalls von einer zentralen Stelle aus- oder eingeschaltet werden können.

Eine Aufgabe der Erfindung liegt in der Schaffung eines Schaltnetzteils, das universeller einsetzbar ist, in Echtzeit an aktuelle Betriebsbedingungen angepasst und besser überwachbar ist.

Die vorliengende Anmeldung betrifft einem Schaltnandler gemäss Anspruch 1.

Diese Aufgabe wird mit einem Schaltnetzteil der eingangs angegebenen Art gelöst, bei welchem erfindungsgemäß ein digitaler Signalprozessor zur laufenden Berechnung der Vorgabewerte für die Ansteuerschaltung vorgesehen ist und der Schaltwandler eine (Bus-) Schnittstelle besitzt, über welche Betriebsparameter von einer externen Leitstelle dem digitalen Signalprozessor übermittelbar und vorgebbar sind.

Dank der Erfindung kann eine laufende Anpassung der Betriebsparameter während des Betriebs erfolgen, wobei die von der Leitstelle, z.B. einem Zentralrechner, ermittelten, für den jeweiligen Betriebszustand einer Anlage, in welcher der Schaltwandler arbeitet, optimalen Einstellungen über die Schnittstelle dem Wandler übermittelt werden.

Zweckmäßig ist eine Variante, bei welcher die (Bus-)Schnittstelle bidirektional ist und Betriebsdaten des Wandlers über die (Bus-)Schnittstelle an die externe Leitstelle übermittelbar sind.

Besonders zweckmäßig ist es in diesem Fall, wenn ein Speicher zur Abspeicherung von Betriebsdaten vorgesehen ist, welche über die (Bus-)Schnittstelle ausgelesen werden können.

Es ist vorteilhaft, wenn ein Hilfsenergiespeicher HES zur permanenten Energieversorgung des digitalen Signalprozessors DSP und/oder des Echtzeit-Bausteins RTC vorgesehen ist, denn dadurch ist eine praktisch unbegrenzte Überwachung des Zustandes gewährleistet. Dabei ist es empfehlenswert, wenn der Hilfsenergiespeicher HES bei Vorhandensein von Primärspannung Up oder/und Sekundärspannung Us nachgeladen wird.

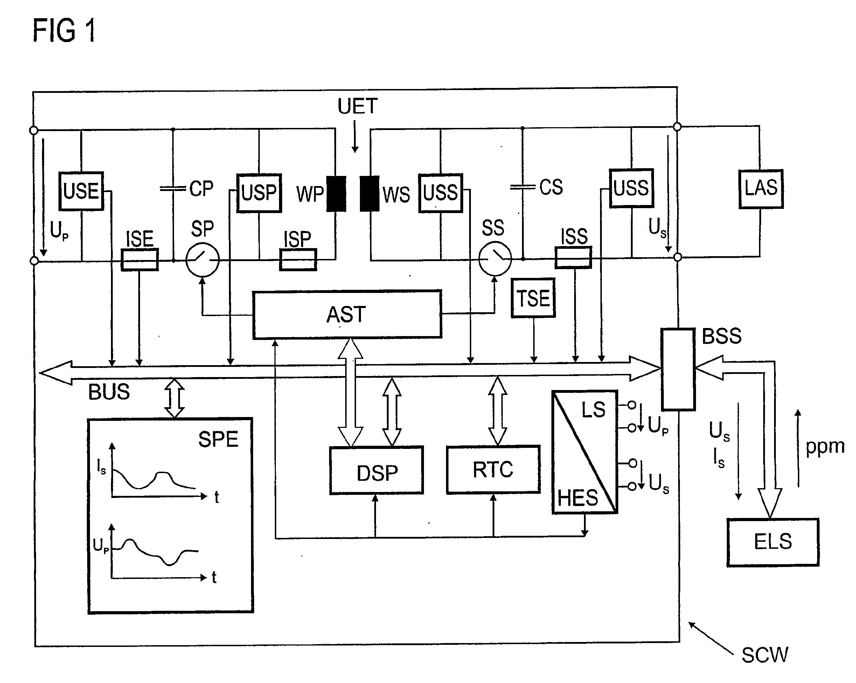

Die Erfindung samt weiteren Vorteilen ist im Folgenden anhand eines Ausführungsbeispiels näher veranschaulicht, das in der Zeichnung dargestellt ist. In dieser zeigt die einzige Figur ein vereinfachtes Schaltbild eines Schaltwandlers nach der Erfindung.

Der in der Figur dargestellte Schaltwandler weist einen Übertrager UET mit einer Primärwicklung WP und einer Sekundärwicklung WS auf. Primärseitig liegt in einer Verbindungsleitung von einer Primärspannung U_{P} zu der Primärwicklung WP ein gesteuerter Primärschalter S_{P}. Parallel zu der Primärspannung U_{P} liegt ein Kondensator CP. Sekundärseitig liegt ein gleicher Aufbau mit einer Sekundärschalter SS in einer Verbindungsleitung zwischen der Sekundärwicklung WS und der Sekundärspannung U_{S}, die an einem Kondensator CS liegt. Im vorliegenden Fall ist eine an der Sekundärspannung Us liegende Last LAS eingezeichnet, woraus ersichtlich ist, dass bei dem gezeigten Beispiel der Energiefluss von der Primärseite mit der Primärspannung U_{P} zu der Sekundärseite mit der Sekundärspannung Us verläuft. Der Wandler kann aber auch bidirektional konzipiert sein, d.h. die Last könnte an der Primärseite liegen und der Energiefluss in die andere Richtung laufen. Die gesteuerten Schalter SP und SS werden von einer Ansteuerschaltung AST angesteuert, welche hier unmittelbar eine Information über den Strom durch die Primärwicklung WP mit Hilfe eines Stromsensors ISP erhält. Die gesteuerten Schalter SP und SS können im Handel erhältliche Halbleiterschalter sein. Soll der Wandler bidirektional arbeiten, sind an dieser Stelle bidirektionale Schaltelemente vorzusehen, welche in beiden Richtungen Strom führen und Sperrspannung aufrecht erhalten können. Stehen derartige Schalter nicht zur Verfügung, so müssen beispielsweise zwei Primärschalter symmetrisch in beiden Zuleitungen zu der Primärwicklung WP vorgesehen sein und gleiches gilt sinngemäß für die Sekundärseite. Außer der Ansteuerschaltung enthält der Wandler nach der Erfindung einen digitalen Signalprozessor DSP, der über einen Bus BUS mit der Ansteuerschaltung AST Informationen austauschen kann. Weiters ist ein Speicher SPE vorgesehen, der gleichzeitig an dem Bus BUS liegt. Über den Bus, gegebenenfalls auch auf direkte Weise, werden Informationen über aktuelle Betriebsgrößen des Wandlers dem digitalen Signalprozessor DSP bzw. auch der Ansteuerschaltung AST zugeführt, nämlich im vorliegenden Fall Informationen über die Primärspannung U_{P} mit Hilfe eines Spannungssensors USE, über den Eingangsstrom mit Hilfe eines Stromsensors ISE, über die Spannung an der Primärwicklung WP mit Hilfe eines Spannungssensors USP, über die Spannung an der Sekundärwicklung WS mit Hilfe eines Spannungssensors USS, über den Sekundär- oder Ausgangsstrom mit Hilfe eines Stromsensors ISS und über die Ausgangsspannung bzw. Sekundärspanüung mit Hilfe eines Spannungssensors USS. Der Schaltwandler SCW besitzt eine (Bus-)Schnittstelle BSS, über welche er mit einer externen Leitstelle ELS in Verbindung gebracht werden kann. Bei der Leitstelle ELS kann es sich beispielsweise um einen Zentralrechner für eine Anlage handeln, in welcher ein oder mehrere Schaltwandler gemäß der Erfindung vorgesehen sind und Anlagenteile mit Energie versorgen. Die Schnittstelle BSS kann galvanisch oder optisch ausgeführt sein oder es kann sich um eine Funkschnittstelle handeln.

Es ist hier anzumerken, dass der gezeigte Aufbau des Schaltwandlers mit einer Primär- und einer Sekundärwicklung WP, WS und zwei gesteuerten Schaltern SP und SS nur eine von vielen möglichen Varianten ist. Die vorliegende Variante kann eine Gleich- oder Wechsel-Primärspannung in eine Gleich- oder Wechsel-Sekundärspannung wandeln. Im Rahmen der Erfindung kann ein Schaltwandler aber auch ein übliches getaktetes Netzgerät sein, welches aus einer Wechsel-Eingangsspannung von z.B. 230 V nach Gleichrichtung eine AusgangsGleichspannung von beispielsweise 12 oder 24 V erzeugt. Ebenso ist es für die Erfindung unerheblich, ob der Wandler ein Sperrwandler, Flusswandler oder eine Mischtype ist. Ebenso muss nicht notwendigerweise ein Übertrager vorgesehen sein, falls keine galvanische Trennung erforderlich ist. In diesem Fall kann z.B. eine einzige Speicherinduktivität Verwendung finden. Die Funktionsweise bekannter Schaltwandler darf vorausgesetzt und muss nicht im Detail erläutert werden.

Das Wesen der Erfindung liegt nun darin, dass der digitale Signalprozessor DSP dazu eingerichtet ist, laufende Berechnungen der Vorgabewerte für die Ansteuerschaltung AST durchzuführen, wobei in Abhängigkeit von gemessenen Betriebsgrößen die Vorgabewerte als Stellgrößen für die Ansteuerschaltung geändert werden. Beispielsweise wird das Tastverhältnis der Ansteuerpulse geändert, gegebenenfalls auch deren Frequenz. Ebenso können die Steuerzeiten der Schalter SP, SS, nämlich die Abweichungen der Einschalt- bzw. Ausschaltzeitpunkte von dem festen Takt geändert werden, wobei durch geeignete Wahl dieser Steuerzeiten bekanntlich kurzschlussähnliche Zustände vermieden werden, andererseits durch Änderung der Steuerzeiten eine Optimierung des Betriebes, z.B. im Sinne einer Kompensation von Abweichungen der Schaltverzögerungen der einzelnen gesteuerten Schalter möglich ist. Neben elektrischen Werten können beispielsweise auch Temperaturwerte berücksichtigt werden, die an verschiedenen Elementen des Schaltwandlers gemessen werden, ebenso die Umgebungstemperatur. Stellvertretend für die Temperaturmessungen ist hier ein Temperatursensor TSE eingezeichnet, welcher beispielsweise in Nähe des Sekundärschalters SS angeordnet ist und seine Temperaturinformation an den Bus BUS liefert.

Für die Erfindung von Bedeutung ist nun der Umstand, dass über die (Bus-)Schnittstelle BSS Betriebsparameter, die hier mit ppm bezeichnet sind, von der externen Leitstelle ELS an den digitalen Signalprozessor DSP übermittelt werden können und Vorgabewerte darstellen, welche auf die Funktion der Ansteuerschaltung AST und somit des Wandlers insgesamt wirken.

Dank der Erfindung ist eine laufende Anpassung der Betriebsparameter während des Betriebs möglicht, die z.B. von einem Zentralrechner ermittelt werden. Für den optimalen Betriebszustand der Anlage, z.B. Standby, Anlauf, Volllast, Teillast, etc. optimalen Einstellungen werden über die (Bus-)Schnittstelle BSS übermittelt und die Software des digitalen Signalprozessors DSP erkennt die Anforderungen dieser neuen Betriebsparameter. In Form einer Interrupt-Routine können die neuen Parameter eingelesen und über geeignete Iterationszyklen in die laufenden Regelalgorithmen als neue Sollwerte aufgenommen werden. Dies alles kann bei laufendem Schaltwandler, somit unterbrechungsfrei erfolgen.

Über die (Bus-)Schnittstelle BSS kann von der externen Leitstelle ELS auch die Rückmeldung aktueller Zustände, wie z.B. der Eingangsspannung U_{P} oder des Ausgangsstroms I_{S} angefordert werden, was in der Zeichnung durch einen Pfeil veranschaulicht ist. Die entsprechenden Werte liegen als digitalisierte Messgrößen ohnedies in dem Schaltwandler vor und es kann somit eine Ausgabe der entsprechenden Größen mit geringem Softwareaufwand über die (Bus-)Schnittstelle erfolgen.

Was den Speicher SPE anbelangt, so können in diesem ausgewählte Betriebsdaten, z.B. die Eingangsspannung U_{P} und der Ausgangsstrom Is abgespeichert werden, was in der Zeichnung durch Zeitdiagramme veranschaulicht ist. Dadurch ist in dem Schaltwandler die Funktion eines speichernden Monitors integriert und für Inbetriebnahme, Service- oder Analysezwecke ist es möglich, Daten früherer Betriebszustände auszulesen, z.B. solche, die einen Netzeinbruch, einen Kurzschluss, etc. betreffen.

Für den Einsatz als Netzmonitor kann es zweckmäßig sein, Toleranzen für "Normalbereiche" vorzugeben, innerhalb derer keine explizite Aufzeichnung (Speicherung der Zeitwerte von Betriebsparametern) erfolgt. Verlässt eine oder mehrere dieser Zustandsgrößen diesen Bereich, so erfolgt Auslösung des Speichermonitors (Triggerung). Somit wird die Effizienz des Datenspeichers erhöht.

Um eine weitere Erhöhung der Informationsdichte (Datenspeicherausnutzung) zu erreichten, werden die oben genannten Betriebszustände "inkremental" erfasst: Gespeichert werden nicht periodisch abgetastete Zeitwerte von Parametern sondern Zeitpunkte, an welchen sich vorher definierbare Änderungen dieser Parameterwerte ergeben. Beispielsweise wird so nicht der Betrag der Netzspannung alle x Millisekunden in eine Tabelle eingetragen, sondern jener Zeitpunkt, in dem die Netzspannung das Toleranzband von 230V + 10 - 15 %verlässt und in ein darunter (-) oder darüber (+) liegendes Toleranzband definierbarer Breite eintritt.

Um dieses Verfahren zu optimieren ist es zweckmäßig, wenn sich ein Echtzeit-Baustein (Real Time Clock) RTC in der Peripherie des digitalen Signalprozessors DSP befindet - die nach obigem Verfahren ermittelten Datenwerte können somit auf aktuelles Datum und Uhrzeit bezogen werden.

Durch permanente Energieversorgung des digitalen Signalprozessors DSP und des Echtzeit-Bausteins RTC ist somit eine praktisch unbegrenzte Überwachung des Zustandes gewährleistet. Diese Energieversorgung kann mittels Kondensator, Akkumulator oder Batterie erfolgen, wozu ein Hilfsenergiespeicher HES vorgesehen ist, der von einer Ladeschaltung LS immer nachgeladen wird, wenn eine Primärspannung Up und/oder eine Sekundärspannung Us vorhanden ist.

## Patentansprüche

1. Schaltwandler (SCW) zum Wandeln einer Primär/Sekundärspannung (U_{P}/U_{S}) in eine Sekundär/Primärspannung (U_{S}/U_{P}), mit zumindest einem gesteuerten Schalter (S_{P}, S_{S}), wobei eine Ansteuerschaltung (AST) in Abhängigkeit von ihr zugeführten Vorgabewerten den zumindest einen gesteuerten Schalter (S_{P}, S_{S}) mit variablem Tastverhältnis und/oder variablen Steuerzeiten und/oder variabler Frequenz ansteuert, wobei ein digitaler Signalprozessor (DSP) zur laufenden Berechnung der Vorgabewerte für die Ansteuerschaltung (AST) vorgesehen ist,
**dadurch gekennzeichnet, dass**
der Schaltwandler (SCW) eine Bus-Schnittstelle (BSS) besitzt, über welche Betriebsparameter (ppm) von einer externen Leitstelle (ELS) dem digitalen Signalprozessor (DSP) übermittelbar und vorgebbar sind und dass die Betriebsparameter (ppm) auf die Funktion der Ansteuerschaltung (AST) wirken.

2. Schaltwandler (SCW) nach Anspruch 1, **dadurch gekennzeichnet, dass** die (Bus-) Schnittstelle (BSS) bidirektional ist und Betriebsdaten (Vₚ, Uₛ, Iₛ) des Wandlers über die Busschnittstelle an die externe Leitstelle (ELS) übermittelbar sind.

3. Schaltwandler nach Anspruch 2, **dadurch gekennzeichnet, dass** ein Speicher (SPE) zur Abspeicherung von Betriebsdaten vorgesehen ist, welche über die (Bus-) Schnittstelle (BSS) ausgelesen werden können.

4. Schaltwandler nach Anspruch 2 oder 3, **dadurch gekennzeichnet, dass** ein Echtzeit-baustein (RTC) vorgesehen ist, um Betriebsdaten mit Zeitwerten zu korrelieren.

5. Schaltwandler nach Anspruch 2, 3, und 4, **dadurch gekennzeichnet, dass** ein Hilfsenergiespeicher (HES) zur permanenten Energieversorgung des DSP und/oder des RTC-Bausteins vorgesehen ist.

6. Schaltwandler nach Anspruch 2, 3, 4, und 5, **dadurch gekennzeichnet, dass** der Hilfsenergiespeicher bei Vorhandensein von Up oder/und Us nachgeladen wird.

## Claims

1. Voltage converter (SCW) for converting a primary/secondary voltage (Uₚ/ Uₛ) into a secondary/primary voltage (Uₛ/ Uₚ), comprising at least one controlled switch (Sₚ, Sₛ), a control circuit (AST) controlling, according to its supplied set points, the at least one controlled switch (Sₚ, Sₛ) with a variable pulse duty factor and/or variable control times and/or variable frequency, a digital signal processor (DSP) being provided for the continuous calculation of the set points for the control circuit (AST),
**characterised in that**
the voltage converter (SCW) comprises a bus interface (BSS), via which operating parameters (ppm) can be transmitted to the digital signal processor (DSP) and can be preset from an external control centre (ELS), and that the operating parameters (ppm) affect the functioning of the control circuit (AST).

2. Voltage converter (SCW) according to claim 1, **characterised in that** the (bus) interface (BSS) is bidirectional and operating data (Vₚ, Uₛ, Is) of the converter can be transmitted via the bus interface to the external control centre (ELS).

3. Voltage converter according to claim 2, **characterised in that** a memory (SPE) for the storage of operating data is provided, which can be read out via the (bus) interface (BSS).

4. Voltage converter according to claim 2 or 3, **characterised in that** a real time clock (RTC) is provided in order to correlate operating data with time values.

5. Voltage converter according to claims 2, 3 and 4, **characterised in that** an auxiliary energy memory (HES) is provided for the permanent energy supply of the DSP and/or of the real time clock.

6. Voltage converter according to claims 2, 3, 4 and 5, **characterised in that** the auxiliary energy memory is reloaded in the presence of Up and/or Uₛ.

## Revendications

1. Transformateur (SCW) à commutation pour transformer une tension (U_{S}/U_{P}) primaire/secondaire en une tension (U_{P}/U_{S}) secondaire/primaire, comprenant au moins un commutateur (S_{P}/S_{S}) commandé, un circuit (AST) de commande commandant, en fonction de valeurs prescrites qui lui sont envoyées, le au moins un commutateur (S_{P}/S_{S}) commandé à un rapport de cycle variable et/ou à des durées de commande variables et/ou à une fréquence variable, un processeur (DSP) numérique de signal étant prévu pour le calcul en continu des valeurs prescrites pour le circuit (AST) de commande,
**caractérisé en ce que**
le transformateur (SCW) à commutation a une interface (BSS) de bus, par laquelle des paramètres (ppm) de fonctionnement peuvent être transmis d'un poste (ELS) de pilotage extérieur au processeur (DSP) numérique de signal et peuvent être prescrits, et **en ce que** les paramètres (ppm) de fonctionnement agissent sur le fonctionnement du circuit (AST) de commande.

2. Transformateur (SCW) à commutation suivant la revendication 1, **caractérisé en ce que** l'interface (BSS) de bus est bidirectionnelle et des données (V_{P}, U_{S}, I_{S}) de fonctionnement du transformateur peuvent être transmises au poste (ELS) extérieur de pilotage par l'interface de bus.

3. Transformateur à commutation suivant la revendication 2, **caractérisé en ce qu'**il est prévu une mémoire (SPE) de mémorisation de données de fonctionnement, qui peuvent être lues par l'interface (BSS) de bus.

4. Transformateur à commutation suivant la revendication 2 ou 3, **caractérisé en ce qu'**il est prévu un module (RTC) en temps réel pour corréler des données de fonctionnement à des valeurs de temps.

5. Transformateur à commutation suivant les revendications 2, 3 et 4, **caractérisé en ce qu'**il est prévu un accumulateur (HES) auxiliaire d'énergie pour l'alimentation permanente en énergie du DPS et/ou du module RTC.

6. Transformateur à commutation suivant les revendications 2, 3, 4 et 5, **caractérisé en ce que** l'accumulateur auxiliaire d'énergie est rechargé en présence de Up ou/et Us.
